# EUROPÄISCHE PATENTANMELDUNG

(11) **EP 2 219 088 A2**
(43) Veröffentlichungstag der Anmeldung: **18.08.2010**
(21) Anmeldenummer: 10001128.7
(22) Anmeldetag: 04.02.2010
(51) Int. Cl.: G05B 17/00, G05B 23/00

(54) **Verfahren und Gerät zur elektronischen Simulation eines Verbrennungsmotors**

(30) Priorität: 13.02.2009 DE 102009008863
(71) Anmelder: Hitzing + Paetzold Elektronische Motormanagement Systeme GmbH, 45966 Gladbeck (DE)
(72) Erfinder: Hitzing, Ralf, 45964 Gladbeck (DE); Paetzold, André, 46286 Dorsten (DE)
(74) Vertreter: Schulte & Schulte

(57) **Zusammenfassung**

Ein Verfahren dient zur Überprüfung der Funktionsfähigkeit eines mobilen oder stationären Diagnosegerätes für Steuer- und/oder Überwachungsaggregate in der Peripherie des Motors eines Kraftfahrzeugs. Dabei wird das Diagnosegerät zur Überprüfung seiner Funktionsfähigkeit an ein Simulationsgerät angeschlossen, durch das einzelne Steuer- und/oder Überwachungsaggregate simuliert werden. Gegenstand der Erfindung ist außerdem ein entsprechendes Simulationsgerät.

## Beschreibung

Die Erfindung betrifft ein Verfahren zur Überprüfung der Funktionsfähigkeit eines mobilen oder stationären Diagnosegerätes für Steuer- und/oder Überwachungsaggregate in der Peripherie des Motors eines Kraftfahrzeugs. Außerdem betrifft die Erfindung ein entsprechendes Simulationsgerät.

Bekannt sind mobile oder stationär einsetzbare Diagnosetester zur Diagnose aller intelligenten Steuer- und Überwachungssysteme in modernen Automobilen. Der Einsatz dieser Geräte wird auch als OBD (On-Board-Diagnose) bezeichnet. Sie dienen zur Diagnose der Motorsteuerungen und Einspritzsysteme sowie der Sicherheits- und Komfortsysteme in einem Fahrzeug. Ein erhebliches Fehlerpotential steckt aber in den Diagnosegeräten selbst, denn diese können bisher nicht in ausreichend sicherer Weise auf ihre Funktionsfähigkeit überprüft werden. Hierzu müssen die Diagnosegeräte letztlich an ein Kraftfahrzeug angeschlossen werden, dessen einwandfreie Funktionstüchtigkeit paradoxerweise ja gerade mit dem Diagnosegerät getestet werden soll. Der Einsatz als Unterrichtsgerät etwa entfällt damit aufgrund dieser Umständlichkeiten bisher komplett, Schulungen sind mit erheblichen Unzulänglichkeiten verbunden.

Damit stellt sich der vorliegenden Erfindung die Aufgabe, ein Verfahren und ein Gerät zur Durchführung dieses Verfahrens zu schaffen, mit dem die Autoelektronik bzw. der Verbrennungsmotor eines Kraftfahrzeugs simuliert werden kann und mit dem ein Testen der OBD auf ihre Funktionsfähigkeit möglich ist.

Diese Aufgabe wird verfahrensgemäß dadurch gelöst, dass das Diagnosegerät zur Überprüfung seiner Funktionsfähigkeit an ein Simulationsgerät angeschlossen wird, durch das einzelne Steuer- und/oder Überwachungsaggregate simuliert werden.

Das erfindungsgemäße Simulationsgerät zur On-Board-Diagnose simuliert einzelne Steuer- und/oder Überwachungsaggregate, so dass bei Anschluss des Diagnose- an das Simulationsgerät ein entsprechender Test des ersteren auf seine Funktionsfähigkeit in zuverlässiger Weise erfolgen kann. Die Aggregate können einzeln oder es können mehrere gleichzeitig entsprechend imitiert werden. Deren vollständige, eingeschränkte oder gar überhaupt nicht mehr vorhandene Funktionsfähigkeit muss dann durch das Diagnosegerät korrekt erfasst werden. Anderenfalls ist davon auszugehen, dass letzteres nicht einwandfrei funktioniert.

Eine bevorzuge Ausführungsform der Erfindung sieht vor, dass Steuer- und/oder Überwachungsaggregate wie z.B. Einspritzventil, Kraftstoffpumpe, Leerlaufsteller, Tankentlüftungsventil, Drucksensoren, Drosselklappenpotentiometer, Zündung, Lambdasonde, Klimaanlage oder Temperaturanzeigen für Wasser und Luft simuliert werden. Mit den entsprechenden Lasten erfolgt dabei eine Simulation der Peripherie des Motors mit den genannten Aggregaten.

Vorrichtungsgemäß wird die erfindungsgemäße Aufgabe durch ein Simulationsgerät gelöst, das dazu dient, durch Simulation einzelner Steuer- und/oder Überwachungsaggregate die Funktionsfähigkeit des Diagnosegerätes zu überprüfen.

Steuer- und/oder Überwachungsaggregate wie z.B. Einspritzventil, Kraftstoffpumpe, Leerlaufsteller, Tankentlüftungsventil, Drucksensoren, Drosselklappenpotentiometer, Zündung, Lambdasonde, Klimaanlage oder Temperaturanzeigen für Wasser und Luft werden durch das erfindungsgemäße Simulationsgerät simuliert. Ein etwaiger Defekt an einem Diagnosegerät kann dann in einfacher Weise festgestellt werden, wenn die simulierten Einstellungen durch das Diagnosegerät nicht in entsprechender Form erfasst bzw. wiedergegeben werden.

Als Herzstück des Simulationsgerätes ist mindestens eine Steuereinheit vorgesehen. Zur Verbindung zwischen der Steuereinheit und einzelnen, oben beschriebenen Lasten, mit denen die Peripherie des Motors simuliert wird, dient eine Platine. Eine oder mehrere Steuereinheiten simulieren das konkrete Automobil. Das bedeutet, dass mit dem erfindungsgemäßen Gerät in Abhängigkeit von der Steuereinheit auch unterschiedliche Fabrikate und Fahrzeugtypen auf denkbar einfache Weise simuliert werden können.

In diesem Sinne ist auch der Vorschlag zu verstehen, wonach die Steuereinheit programmierbar ausgebildet ist. Damit ist das Gerät auch herstellerunabhängig und besonders flexibel einsetzbar, indem die Steuereinheit im Hinblick auf verschiedene Fahrzeugtypen und -eigenschaften programmierbar ausgebildet ist, so dass nicht etwa für jedes Fahrzeug ein eigenes Simulationsgerät vorgehalten werden müsste.

Eine weitere Variante der Erfindung in diesem Zusammenhang sieht vor, dass die Steuereinheit auswechselbar ausgebildet ist. Zudem kann das Simulationsgerät auch mit mehreren, unabhängig voneinander einsetzbaren Steuereinheiten ausgerüstet sein, die jeweils separat angesprochen werden.

Es ist außerdem vorgesehen, dass die Simulation des Motordrehzahlsignals durch eine in das Simulationsgerät integrierte Platine mit einem Funktionsgenerator erfolgt.

Es wurde bereits darauf hingewiesen, dass es als vorteilhaft anzusehen ist, dass das Simulationsgerät separate Lastwiderstände in Form von z.B. Einspritzventil, Kraftstoffpumpe, Leerlaufsteller, Tankentlüftungsventil, Drucksensoren, Drosselklappenpotentiometer, Zündung, Lambdasonde, Klimaanlage oder Temperaturanzeige für Wasser und Luft aufweist. Diese Lastwiderstände sind separat angeordnet und können auch entsprechend separat angesprochen werden.

Im Hinblick auf die Bedienung des Simulationsgerätes ist vorgesehen, dass das Gehäuse des Simulationsgerätes einen Schalter für die An-/Aus-Funktion, einen Schalter für die Zündungsfunktion und einen Schalter für die Startfunktion aufweist, quasi entsprechend den Schlüsselstellungen beim Starten eines Fahrzeugs. Simuliert wird dabei nach Einschalten des Simulationsgerätes über die An-/Aus-Funktion über den zweiten Schalter zunächst der Leerlauf und dann bei Betätigung über einen weiteren Schalter die Startfunktion.

Ergänzend hierzu wird vorgeschlagen, dass das Gehäuse des Simulationsgerätes mindestens einen Schalter für die Variation der Drehzahl des Motors aufweist. Mit dem erfindungsgemäßen Gerät kann eine Drehzahl im Bereich von etwa
760 - 6200 Umdrehungen pro Minute simuliert werden. Dies geschieht bei Betätigung des entsprechenden Schalters für die Variation der Drehzahl des Motors in stufenloser und damit im Rahmen der Testfunktion gut nachvollziehbarer Form. Bevorzugt ist dabei, dass das Gehäuse jeweils einen Schalter für die Erhöhung und die Reduzierung der Drehzahl aufweist.

Eine weitere Variation der Erfindung umfasst, dass das Gehäuse des Simulationsgerätes mindestens einen An-/Aus-Schalter für die Fehlersimulation und/oder eine Änderung der Fehlersimulation aufweist. Hier kann gezielt durch Betätigung der Schalter die Fehlersimulation ein- bzw. ausgestellt und variiert werden. Entsprechende Anzeigen eines funktionstüchtigen Diagnosegerätes müssten dann veranschaulichen, dass die simulierten Fehler tatsächlich auch durch das Diagnosegerät erfasst werden.

In diesem Zusammenhang ist auch der Vorschlag zu verstehen, wonach die Darstellung der Messergebnisse in optischer und/oder akustischer Form am Simulationsgerät und/oder Diagnosegerät erfolgt. Entsprechende Manipulationen und Verstellungen am Simulationsgerät müssen in Konsequenz, ein fehlerfrei arbeitendes Diagnosegerät vorausgesetzt, durch das Diagnosegerät erfasst und entsprechend wiedergegeben werden.

Die Erfindung zeichnet sich insbesondere dadurch aus, dass mobil oder stationär einsetzbare Diagnosetester zur Diagnose aller intelligenten Steuer- und Überwachungssysteme in modernen Automobilen nunmehr selbst in besonders geeigneter Weise auf ihre Funktionsfähigkeit getestet werden können. Hierzu dient ein Verfahren, bei dem das Diagnosegerät an ein Simulationsgerät angeschlossen wird, durch welches letztlich sämtliche relevanten Steuer- und/oder Überwachungsaggregate in der Peripherie des Motors simuliert werden können. Die diversen Aggregate können dabei ebenso separat simuliert werden, wie unterschiedliche Fahrzeugfabrikate und -typen, wozu eine ggf. auswechselbare und programmierbare Steuereinheit dient. Ein korrekt funktionierendes Diagnosegerät zeigt dann auf dem Display den zuvor auf dem Simulationsgerät absichtlich vorgenommenen Fehler an. Auch Variationen einzelner Werte, etwa eine Erhöhung oder Reduzierung der Drehzahl sind auf einfache Weise durch Betätigung einer entsprechenden Handhabe möglich. Auch mehrere Steuereinheiten sind parallel oder in Ergänzung zueinander einsetzbar. Das erfindungsgemäße Simulationsgerät kann vorteilhafterweise auch für Unterrichtszwecke im Rahmen der Ausbildung von Fahrzeugmechanikern, -mechatronikern etc. Einsatz finden. Aufgrund der bisher gegebenen äußerst beschränkten Möglichkeiten - die Tests mussten mit realen Automobilen durchgeführt werden - war ein solcher Einsatz bisher in Unterrichtsräumen etwa gar nicht möglich.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: ein Simulations- und ein mit diesem verbundenes Diagnosegerät,
- Figur 2: ein vereinfachtes Blockschaltbild.

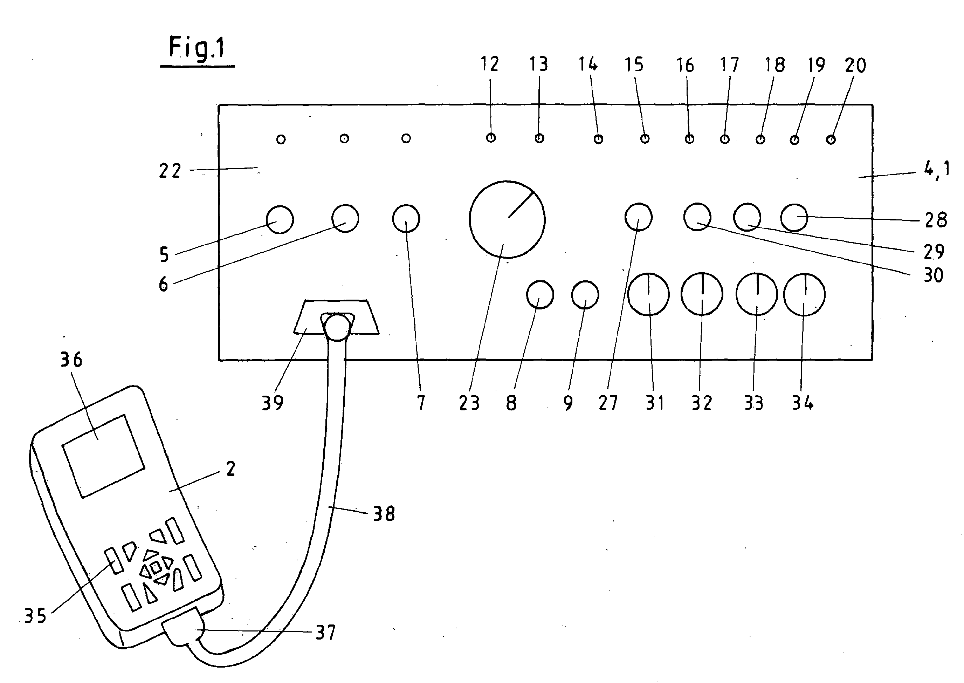

In Figur 1 ist das erfindungsgemäße Simulationsgerät 1 in Form seines Gehäuses 4 mit Blick auf die Frontplatte 22 dargestellt. Das Simulationsgerät 1 ist über Anschlüsse 37, 39 und ein Kabel 38 mit dem Diagnosegerät 2 verbunden. Auf dem Gehäuse ist eine Vielzahl von Schaltern angeordnet. Von besonderer Bedeutung sind dabei zunächst die Schalter 5 für die An-/Aus-Funktion des Simulationsgerätes 1, der Schalter 6 für die Zündungsfunktion, der also einen um eine Position gedrehten Schlüssel entspricht und der Schalter 7 für die Startfunktion. Diverse Lampen entsprechen den verschiedenen Aggregaten aus der Peripherie eines Fahrzeugmotors, etwa die Lampe 12 der Verbrauchsanzeige, die Lampe 13 dem Tankentlüftungsventil, die Lampe 14 der Drehzahl, die Lampe 15, 16 dem Leerlaufsteller, die Lampe 17, 18 zwei Ausgängen der Zündung und die Lampen 19, 20 den Einspritzventilen. Darunter befinden sich die vier Schalter 24, 28, 29, 30 zur Aktivierung der Fehlerfunktion und die Schalter 31, 32, 33, 34 zur Variation, so dass bei deren Betätigung, sofern das Diagnosegerät 2 korrekt funktioniert, es zu einer entsprechenden Anzeige auf dem Display 36 kommt, anderenfalls ist von einem fehlerhaft funktionierenden Diagnosegerät 2 auszugehen. Der Funktionsschalter ist mit dem Bezugszeichen 23 versehen. Bei Drücken des Schalters 8 kann die Drehzahl erhöht, bei Betätigung des Schalters 9 reduziert werden, beides stufenlos. Mit dem Bezugszeichen 35 ist außerdem noch beispielhaft ein Bedienknopf des Diagnosegerätes 2 bezeichnet.

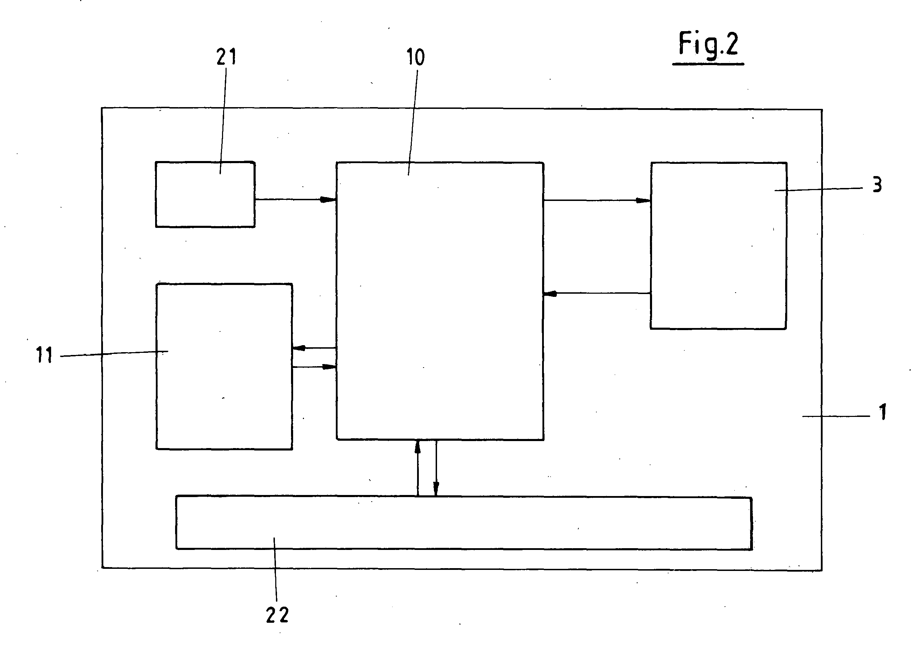

Figur 2 stellt ein vereinfachtes Blockschaltbild eines Simulationsgerätes 1 für die OBD dar. Das Gerät 1 umfasst die Platine 10 mit Hauptrelais, Kraftstoffpumpenrelais sowie der Sensorensimulation. Letztere bezieht sich auf Aggregate wie Lambdasonde, Fühler für Motor-, Kühlmitteltemperatur-, Ansaugrohrdruckfühler oder Drosselklappenpotentiometer. Die Hauptplatine umfasst außerdem einen Relaismultiplexer zum Umschalten zwischen fehlerfreiem Leerlaufbetrieb und einstellbarem Motorlauf z.B. für die Fehlersimulation. Die einzelnen Lasten sind symbolisch als Block mit dem Bezugszeichen 11 versehen. Simuliert werden können dort Lasten wie Einspritzventile, Doppelfunkenzündspule, Tankentlüftungsventil, Leerlaufregelung etc. und damit z.B. in Form von Widerständen solche Lasten, deren Simulation insbesondere ggf. mit einer Temperaturentwicklung verbunden ist, so dass die Platine 10 entsprechend geschont werden kann. Die Platine 10 dient zur Verbindung zwischen der Steuereinheit 3 und den einzelnen Lasten, mit denen die Peripherie des Motors simuliert wird. Eine solche oder mehrere Steuereinheiten 3 simulieren das konkrete Automobil, so dass unterschiedliche Fabrikate und Fahrzeugtypen mit verschiedenen Steuereinheiten 3 simuliert werden können. Hierzu kann die Steuereinheit 3 entsprechend programmierbar ausgebildet sein und/oder ausgewechselt werden. Mit dem Bezugszeichen 22 ist die diverse Schalter, Taster, Lampen oder den Anschluss für das Diagnosegerät aufweisende Frontplatte, mit 21 das Schaltnetzteil bezeichnet.

## Patentansprüche

1. Verfahren zur Überprüfung der Funktionsfähigkeit eines mobilen oder stationären Diagnosegerätes für Steuer- und/oder Überwachungsaggregate in der Peripherie des Motors eines Kraftfahrzeugs,
**dadurch gekennzeichnet,**
**dass** das Diagnosegerät zur Überprüfung seiner Funktionsfähigkeit an ein Simulationsgerät angeschlossen wird, durch das einzelne Steuer- und/oder Überwachungsaggregate simuliert werden.

2. Verfahren nach Anspruch 1,
**dadurch gekennzeichnet,**
**dass** Steuer- und/oder Überwachungsaggregate wie z.B. Einspritzventil, Kraftstoffpumpe, Leerlaufsteller, Tankentlüftungsventil, Drucksensoren, Drosselklappenpotentiometer, Zündung, Lambdasonde, Klimaanlage oder Temperaturanzeige für Wasser und Luft simuliert werden.

3. Simulationsgerät (1) zur Überprüfung der Funktionsfähigkeit eines mobilen oder stationären Diagnosegerätes (2) für Steuer- und/oder Überwachungsaggregate in der Peripherie des Motors eines Kraftfahrzeugs,
**dadurch gekennzeichnet,**
**dass** das Simulationsgerät (1) dazu dient, durch Simulation einzelner Steuer- und/oder Überwachungsaggregate die Funktionsfähigkeit des Diagnosegerätes (2) zu überprüfen.

4. Simulationsgerät nach Anspruch 3,
**dadurch gekennzeichnet,**
Steuer- und/oder Überwachungsaggregate wie z.B. Einspritzventil, Kraftstoffpumpe, Leerlaufsteller, Tankentlüftungsventil, Drucksensoren, Drosselklappenpotentiometer, Zündung, Lambdasonde, Klimaanlage oder Temperaturanzeige für Wasser und Luft.

5. Simulationsgerät nach Anspruch 1,
**dadurch gekennzeichnet,**
**dass** das Simulationsgerät (1) mindestens eine Steuereinheit (3) aufweist.

6. Simulationsgerät nach Anspruch 5,
**dadurch gekennzeichnet,**
**dass** die Steuereinheit (3) programmierbar ausgebildet ist.

7. Gerät nach Anspruch 6,
**dadurch gekennzeichnet,**
**dass** die Steuereinheit (3) in Hinblick auf verschiedene Fahrzeugtypen und - eigenschaften programmierbar ausgebildet ist.

8. Gerät nach Anspruch 5,
**dadurch gekennzeichnet,**
**dass** die Steuereinheit (3) auswechselbar ausgebildet ist.

9. Simulationsgerät nach Anspruch 1,
**dadurch gekennzeichnet,**
**dass** die Simulation des Motordrehzahlsignals durch eine in das Simulationsgerät (1) integrierte Platine (10) mit einem Funktionsgenerator erfolgt.

10. Simulationsgerät nach Anspruch 9,
**dadurch gekennzeichnet,**
**dass** das Simulationsgerät (1) separate Lastwiderstände in Form von z.B. Einspritzdüse, Kraftstoffpumpe, Leerlaufsteller, Tankentlüftungsventil, Drucksensoren, Drosselklappenpotentiometer, Zündung, Lambdasonde, Klimaanlage oder Temperaturanzeigen für Wasser und Luft aufweist.

11. Simulationsgerät nach Anspruch 1,
**dadurch gekennzeichnet,**
**dass** das Gehäuse (4) des Simulationsgerätes (1) einen Schalter (5) für die An-/Aus-Funktion, einen Schalter (6) für die Zündungsfunktion und einen Schalter (7) für die Startfunktion aufweist.

12. Simulationsgerät nach Anspruch 1,
**dadurch gekennzeichnet,**
**dass** das Gehäuse (4) des Simulationsgerätes (1) mindestens einen Schalter (8, 9) für die Variation der Drehzahl des Motors aufweist.

13. Simulationsgerät nach Anspruch 1,
**dadurch gekennzeichnet,**
**dass** das Gehäuse (4) des Simulationsgerätes (1) mindestens einen An-/Aus-Schalter (27-30) für die Fehlersimulation und/oder eine Änderung der Fehlersimulation aufweist.

14. Simulationsgerät nach Anspruch 1,
**dadurch gekennzeichnet,**
**dass** die Darstellung der Messergebnisse in optischer und/oder akustischer Form am Simulationsgerät (1) und/oder Diagnosegerät (2) erfolgt.
